# EUROPEAN PATENT SPECIFICATION

(11) **EP 3 753 761 B1**
(45) Date of publication and mention of the grant of the patent: **23.08.2023**
(21) Application number: 19382508.0
(22) Date of filing: 18.06.2019
(51) Int. Cl.: B60G 9/00, B60G 17/005, B62D 61/12

(54) **LIFT FOR A ROTARY AXLE OF INDUSTRIAL VEHICLES**
HEBEVORRICHTUNG FÜR EINE DREHACHSE VON INDUSTRIEFAHRZEUGEN
APPAREIL DE LEVAGE POUR ESSIEU ROTATIF DES VÉHICULES INDUSTRIELS

(43) Date of publication of application: 23.12.2020
(73) Proprietor: Piñeiro Losada, Ana María, 50012 Zaragoza (ES)
(72) Inventor: Piñeiro Losada, Ana María, 50012 Zaragoza (ES)
(74) Representative: Ungria López, Javier

(56) References cited:
- EP-A1- 0 941 915
- EP-A1- 1 332 954
- EP-A1- 2 774 830
- EP-A1- 2 930 089
- EP-B1- 0 941 915
- EP-B1- 1 332 954

## Description

### TECHNICAL FIELD

The present invention relates to a lift for a rotary axle of industrial vehicles, being the type of lifts which are coupled to the support of the air suspension of the arm of the leaf spring or similar attached to the rotary axle to be lifted and to the suspension air spring, and which are made up of a pair of side parts, which at one of the ends thereof have corresponding holes for joining to the support of the suspension, a spacer and a stop on the support of the suspension and on the opposite end thereof they are joined to each other through a carrier body of a bellows or similar which acts as lifting means, having the essential objective of facilitating the coupling of the lift to the support of the suspension in a simple and quick manner.

### BACKGROUND OF THE INVENTION

As is known, many industrial vehicles, with several rotary axles, are equipped with rotary axle lifts, in order to be able to lift that axle equipped with it and avoid the wear of the corresponding wheels, meaning, when the vehicle is not carrying a load, the axle is lifted and when it is carrying, a load they stay in contact with the ground.

To do so, there are different types of lifts, and, thus, we can cite patent document ES 2268305 which describes a lifting device consisting of a pair of L-shaped side parts joined, by the horizontal flange thereof by means of a bellows or similar, the vertical and upper branch of said L-shaped side parts being hinged, halfway above the bellows, to connecting rods that in turn are joined to a U-shaped spacer, which includes longitudinal alignments of holes which allow the position of a transverse roller to be adjusted, whereon the leaf spring arm rests, being able to adjust the working position thereof.

Likewise, we can cite patent document EP 2930089 A1 wherein a fastening system for joining a lifting support to the suspension support of an industrial vehicle is described, which comprises an anchor plate made up of an arched laminar body having a region with an open joint with a radius of curvature complementary to the diameter of a pivot bolt located in the suspension support, a nut coupled by threading at one end to said pivot bolt, said anchor plate being provided with a pair of through holes for the insertion of anchoring screws capable of passing through at least one through hole present in the lifting support, such that the regulation means of the working height consist of a plurality of aligned holes which are arranged on two facing sides of the lifting support through which the passage of a support bar is possible.

Regardless of the configurations described, in all cases, the coupling and assembly of the lifts has the disadvantage of being complex, laborious and with possible risks for the operator who carries it out, since to do so they must be introduced under the platform of the vehicle and carry out the coupling and assembly thereof, needing to adopt uncomfortable positions and with a limited space which is aggravated by the weight of the lift which makes it even more difficult to perform the manoeuvres.

### DESCRIPTION OF THE INVENTION

In the present specification, a lift for a rotary axle of industrial vehicles suitable for being coupled to a support of an air suspension of a suspension arm attached to the rotary axle to be lifted and to an air spring of the suspension, wherein the lift comprises a first unitary side part and a second side part with a generally laminar shape which, by the upper end thereof, are couplable to the support of the suspension and by the lower end thereof are joined through a carrier body of a bellows which acts as lifting means, wherein:
- the first unitary side part provided with first holes and/or slots for positioning and joining a spacer and the second side part defined by a first and a second plate able to be fastened to each other by at least one joining element, preferably a first screw, and a second fastening element, such that the joint of both plates, with a generally laminar shape, defines a structure similar to the first unitary side part;
- the first plate, which on the lower side thereof, opposite from that of the joint with the second plate, is fastened to the lower end of the first unitary side part of the lift by means of the carrier body of the bellows or air spring, the first plate having second holes and/or slots, and the second plate, on the upper side thereof opposite from that of the joint with the first plate, has an upper hole for joining to the support of the air suspension, and also has third holes and/or slots, and; $
- the joint of the first plate with the first unitary side part by means of the spacer being able to adjust the position of the lift depending on the suspension.

The first plate, which makes up part of the second side part, has on a side for adhering and joining to the second plate second holes and/or slots for positioning and joining the spacer, similar to the first holes and/or slots of the first side part.

The second plate, which makes up part of the second part, which is able to be joined on the upper portion thereof to the support of the air suspension, through the upper hole thereof, has on the side for attachment and joining thereof to the first plate, third holes and/or slots for joining to said first plate.

The joint of the first plate and the second plate is defined by a joining element, preferably a first screw, and a fastening element, preferably a secured lug, of the first plate or of the second plate which fits into a complementary recess of the second plate or of the first plate.

In a variant of a practical embodiment, the joint of the first plate and the second plate is defined by the second and third holes and/or slot, similar to each other, on which both plates with the first joining element and a registration element, preferably a second screw in order to position the second plate with respect to the first plate.

The second side part, defined by a joint of the first plate and the second plate, is joined to the first unitary side part by means of a spacer.

To complement the following description and for the purpose of helping to better understand the features of the invention, a set of drawings is attached to the present specification, in the figures of which, by illustration and not limitation, the most characteristic details of the invention are represented.

### BRIEF DESCRIPTION OF THE FIGURES

To complete the description and to help make the invention more readily understandable, said description is accompanied by a set of figures wherein the following is depicted with an illustrative and non-limiting character:
Figure 1. It shows a side view of the lift object of the invention fastened to the support of the suspension and being attached to an arm, to which the axle to be lifted and the suspension air spring are fastened.
Figure 2. It shows a side view of an equivalent lift object of the invention fastened to the support of the suspension and being attached to the spring arm, to which the axle to be lifted and the suspension air spring are fastened.
Figure 3. It shows an exploded perspective view of the lift, showing the second side part of the lift with the two plates thereof, making up part of the same, disassembled for the subsequent fastening thereof.
Figures 4 and 5 show respective perspective views of a pair of lifts, fastened to respective supports of the suspension, showing how the side parts of the lifts are assembled on different sides for the assembly thereof on one side or the other of the vehicle and as the spacer is made up of respective platens anchored in the positioning slots thereof.
Figures 6 and 7 show respective perspective views of a pair of lifts, fastened to respective supports of the suspension, showing how the side parts of the lifts are assembled on different sides for the assembly thereof on one side or the other of the vehicle and as the spacer is made up of respective bodies with a quadrangular cross section anchored by a bolt passing through the corresponding positioning holes.
Figure 8. It shows an exploded perspective view of the lift relative to Figure 2 that is attached to the spring arm, showing how the spacer is made up of a platen and the stop on the support of the suspension is made up of a body with a quadrangular cross section.
Figure 9. It shows a perspective view of the lift of the previous figure assembled on the support of the suspension and attached to the spring arm.
Figure 10. It shows a perspective view of the assembly of a lift in the support of the suspension in four successive steps.

### PREFERRED EMBODIMENT OF THE INVENTION

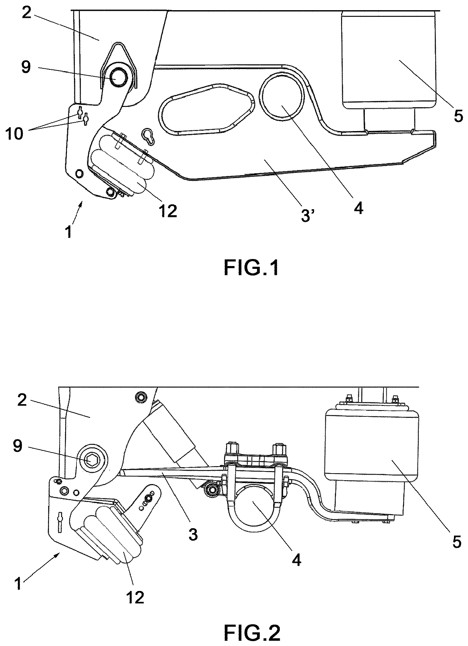

In light of the aforementioned figures and according to the adopted numbering, we can see how the lift 1 for the rotary axle of industrial vehicles, represented in Figure 1, is of the type of lifts that are coupled to the support 2 of the air suspension of the arm 3' of the leaf spring, attached to the rotary axle 4 to be lifted and to the suspension air spring 5, the lift 1 of which is made up of a pair of side parts 6 and 7 which at on one of the ends thereof have corresponding holes 8 for joining to the support 2 of the suspension when fitting into respective projections 9 thereof and they incorporate a spacer between said side parts, while on the opposite end thereof they are fastened by means of a bellows 12 or similar which acts as lifting means when inflated. Logically, the projection 9 could be any other projection or hole of the support 2.

In Figure 2 of the designs, an equivalent embodiment can be seen, such that the lift 1 for a rotary axle of industrial vehicles is fastened, through the bellows 12, to an arm 3 attached to the rotary axle 4 to be lifted and to the suspension air spring 5.

Starting from this known general constitution, the object of the invention is based on the fact that a first side part 6 of the lift 1 is made up of a unitary part, while a second side part 7 is made up of a first plate 13 and a second plate 14, able to be fastened to each other by, at least, one first screw 15 and a second fastening element, such that the joint of both plates 13 and 14 define a structure similar to the first unitary side part 6. Based on this, both side parts 6 and 7 are interchangeable thanks to said similar structure according to the orientation that the lift 1 needs to have in order to be coupled to the support 2 of the air suspension.

In this manner, a first plate 13, on the side opposite from that of its joint with the second plate, is fastened to the lower end of the first unitary side part 6 of the lift 1, by means of a carrier support of a bellows 12 or spring, and the second plate 14 on the upper side thereof, opposite from that of the fastening to the first plate 13, has the corresponding hole 8 for joining and fastening to the corresponding projection 9 of the support 2 of the suspension.

The first unitary side part 6 is provided with first holes and/or slots 10 for positioning and joining the spacer 11 or 11', which can be made of a body 11 with a quadrangular cross section fastened by a pair of screws inserted into the holes or a platen 11' inserted into the slots.

On the other hand, in order to obtain a suitable fastening between the first plate 13 and the second plate 14 making up part of the second side part 7, in a practical embodiment of the invention, one of the plates 13 or 14 has, integrally, a lug 17 which fits into a complementary recess 18 of the other plate 13 or 14, while in a variant of a practical embodiment of the invention the fastening between the plates 13 and 14 is defined by a pair of screws, meaning, in this variant of a practical embodiment, the means made up of the complementary lug 17 and recess 18 are replaced by a second through screw passing through respective matching holes of both plates 13 and 14 and corresponding torque nut.

Likewise, the first plate 13 has second holes and/or slots 10' and the second plate 14, on the upper side thereof opposite from that of the joint with the first plate 13, has a hole 8 for joining to the support 2 of the air suspension, and, likewise, it has third holes and/or slots 10", such that through the mentioned holes and/or slots, the corresponding spacer is arranged and fastened which, in turn, can act as a stop on the support 2 of the suspension.

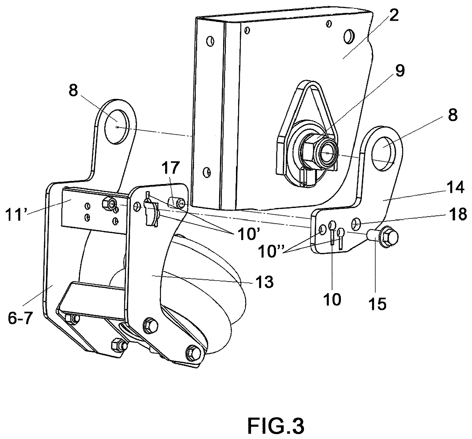

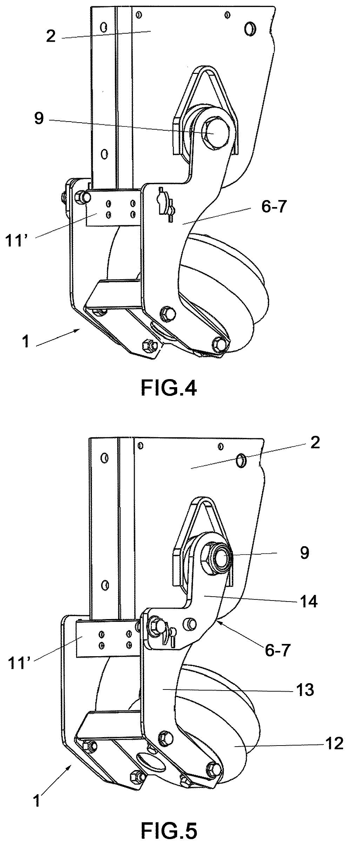

Referring to the attached figures, we can see how in Figure 3 the second plate 14, making up part of the second side part 7 of the lift 1, will be joined to the first plate 13 by means of the first screw 15 and corresponding nut and fitting the lug 17, integral with the first plate 13, in the complementary recess 18 of the second plate 14, while the side end of the platen 11' fits into the slot of the third holes and/or slots 10" of the second plate 14, as seen in Figure 5.

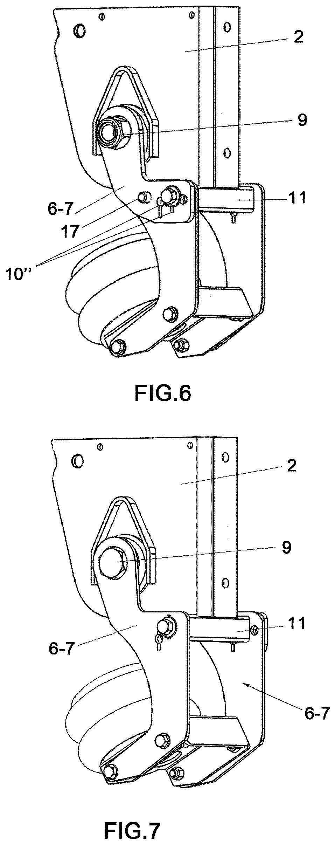

In Figures 4 and 5, the lift 1 is shown on both sides, meaning, showing the first unitary side part 6 and the second side part 7 made up of the joint of the first plate 13 and the second plate 14, as well as the spacer made of the platen 11', while in Figures 6 and 7, the lift 1 is likewise represented on the two sides thereof, showing the first unitary side part 6 and the second side part 7 made up of the joint of the first plate 13 and the second plate 14, as well as the spacer made of the body 11 with a quadrangular cross section.

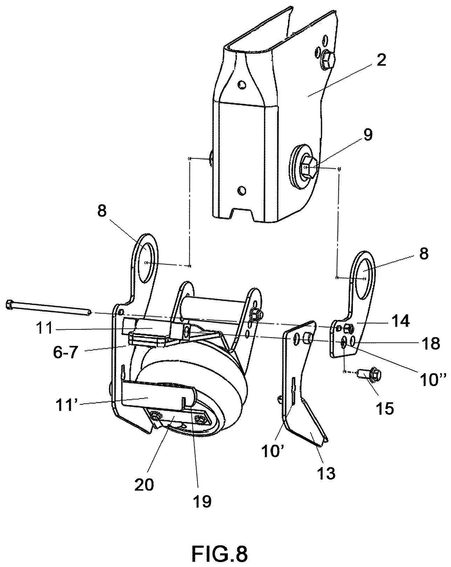

Figure 8 shows the exploded view of a lift 1, which corresponds to the embodiment relating to Figure 2 which is attached to the leaf spring arm 3, showing how the spacer is made of a platen 11', inserted into the slots relating to the first holes and/or slots 10 of the first unitary side part 6 and the second holes and/or slots 10" of the first plate 13, making up the second side part 7.

In this embodiment, the configuration of the platen 11' which makes up the spacer is observed, being able to see how in the recessed ends 19 thereof it has respective cuts 20 for fitting it into the slots of the corresponding holes and/or slots.

Likewise, it can be seen how the stop on the suspension support 2 is made of a body 11 with a quadrangular cross section which likewise acts as a spacer and is fastened between the corresponding holes relative to the first holes and/or slots 10 of the first unitary side part 6 and the holes relative to the second and third holes and/or slots, of the first plate 13 and of the second plate 14, by means of respective screws.

Likewise, it can be seen how the joint between the first plate 13 and the second plate 14 forming the second side part 7 of the lift 1 is made of means of the very fastening screw of the body 11 with a quadrangular cross section and the lug 17, integral to the first plate 13, able to be fit in the recess 18 of the second plate 14.

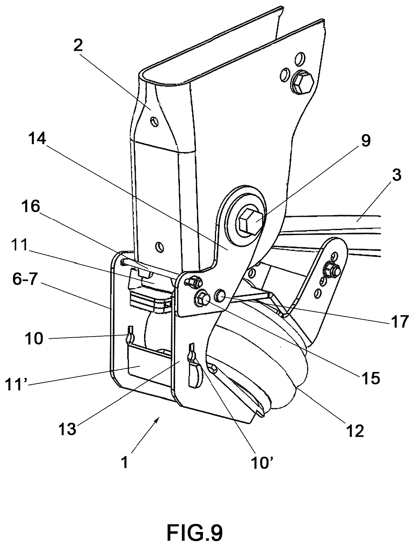

The assembly of the lift 1, shown in figure 9, is completed by the bolt 16 inserted between the first unitary side part 6 and the second side part 7 which abuts on the suspension support 2.

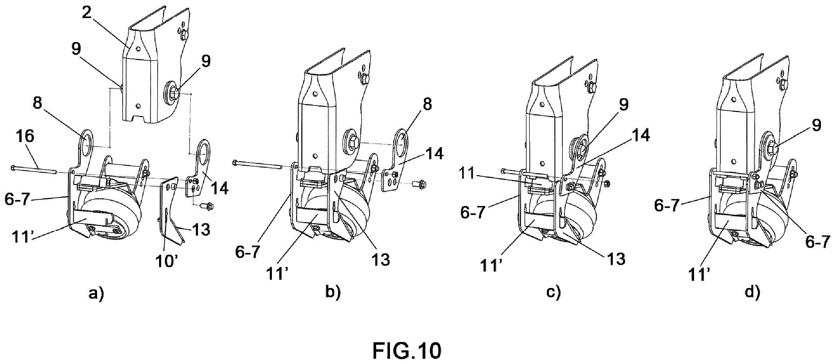

Finally, in Figure 10 shows in four steps how the assembly of a lift 1 is carried out on the support 2 of the suspension, and thus we can see how, in the first place, the lift 1 will be "hung up" on the support 2 of the suspension when the upper hole 8 of the first unitary side part 6 is fit on a projection 9, while the spacer 11' will be anchored in the corresponding slot of the second holes and/or slots 10' of the first plate 13.

Then, the second plate 14 will be joined to the first plate 13 through the first screw 15 and when the lug 17, integral with the first plate 13, is inserted into the recess 18 of the second plate 14, such that, simultaneously, at the joint of the first plate 13 with the second plate 14 by the first screw 15 the body 11 with a quadrangular cross section is fastened by abutting on the support 2 of the suspension, while the upper hole 8 of the second plate has been inserted into a projection 9 of the support 2 of the suspension, to finish the assembly by inserting the bolt 16 between respective holes of the first unitary side part 6 and of the second plate 14 making up the second side part 7.

Thus, the assembly of the lift 1 is carried out in a simple and quick manner, being able to evaluate that the assembly thereof is carried out in less than 30 seconds.

Likewise, we can refer to the significant advantages provided by the described assembly, since, when assembling the lift 1, the first unitary side part 6 of the lift will always remain on the inside of the vehicle body and the second side part 7 made up of the joint of the plates 13 and 14 will always be on the outside, allowing the operator who assembles the lift to always be on the outside of the vehicle body, not having to be placed underneath it, avoiding bad postures and possible accidents.

## Claims

1. A lift (1) for a rotary axle (4) of industrial vehicles suitable for being coupled to a support of an air suspension of a suspension arm attached to the rotary axle (4) to be lifted and to an air spring of the suspension, **characterised in that** the lift (1) comprises a first unitary side part (6) and a second side part (7) with a generally laminar shape which, by the upper end thereof, are couplable to the support of the suspension and by the lower end thereof are joined through a carrier body of a bellows which acts as lifting means, wherein:
• the first unitary side part (6) provided with first holes and/or slots (10) for positioning and joining a spacer (11) and the second side part (7) defined by a first and a second plate (13, 14) able to be fastened to each other by at least one joining element (15), preferably a first screw (15), and a second fastening element, such that the joint of both plates (13, 14), with a generally laminar shape, defines a structure similar to the first unitary side part (6);
• the first plate (13), which on the lower side thereof, opposite from that of the joint with the second plate (14), is fastened to the lower end of the first unitary side part (6) of the lift (1) by means of the carrier body of the bellows (12) or air spring, the first plate (13) having second holes and/or slots (10'), and the second plate (14), on the upper side thereof opposite from that of the joint with the first plate (13), has an upper hole (8) for joining to the support (2) of the air suspension, and also has third holes and/or slots (10"), and;
• the joint of the first plate (13) with the first unitary side part (6) by means of the spacer (11) being able to adjust the position of the lift (1) depending on the suspension.

2. The lift (1) for a rotary axle (4) of industrial vehicles, according to claim 1, **characterised in that** the first plate (13), which makes up part of the second side part (7), has on a side for adhering and joining to the second plate (14) second holes and/or slots (10') for positioning and joining the spacer (11), similar to the first holes and/or slots (10) of the first side part (6).

3. The lift (1) for a rotary axle (4) of industrial vehicles, according to claim 1, **characterised in that** the second plate (14), which makes up part of the second part (7), which is able to be joined on the upper portion thereof to the support (2) of the air suspension, through the upper hole (8) thereof, has on the side for attachment and joining thereof to the first plate (13), third holes and/or slots (10") for joining to said first plate (13).

4. The lift (1) for a rotary axle (4) of industrial vehicles, according to claim 1, **characterised in that** the joint of the first plate (13) and the second plate (14) is defined by a joining element (15), preferably a first screw (15), and a fastening element (17), preferably a secured lug (17), of the first plate (13) or of the second plate (14) which fits into a complementary recess (18) of the second plate (14) or of the first plate (13).

5. The lift (1) for a rotary axle (4) of industrial vehicles, according to the preceding claims, **characterised in that** the joint of the first plate (13) and the second plate (14) is defined by the second and third holes and/or slot, similar to each other, on both plates (13, 14) with the joining element (15) and a registration element, preferably a second screw, in order to position the second plate (14) with respect to the first plate (13).

6. The lift (1) for a rotary axle (4) of industrial vehicles, according to claim 1, **characterised in that** the second side part (7), defined by a joint of the first plate (13) and the second plate (14), is joined to the first unitary side part (6) by means of a spacer (11).

## Patentansprüche

1. Lift (1) für eine Drehachse (4) von Industriefahrzeugen, geeignet zum Koppeln mit einer Stütze einer Luftfederung eines an der anzuhebenden Drehachse (4) und einer Luftfeder der Federung befestigten Querlenkers, **dadurch gekennzeichnet, dass** der Lift (1) ein erstes selbsttragendes Seitenteil (6) und ein zweites Seitenteil (7) mit einer im Wesentlichen lamellierten Form umfasst, die durch ihr oberes Ende mit der Stütze der Federung koppelbar sind und durch ihr unteres Ende durch einen Trägerkörpers eines Balges, der als Hubmittel dient, verbunden sind, wobei:
das erste selbsttragende Seitenteil (6) mit ersten Löchern und/oder Schlitzen (10) zum Anordnen und Verbinden einer Distanz (11) ausgestattet ist und das zweite Seitenteil (7) durch eine erste und eine zweite Platte (13, 14), ausgebildet zum Befestigen aneinander durch wenigstens ein Verbindungselement (15), vorzugsweise eine erste Schraube (15), und ein zweites Befestigungselement, so dass die Verbindung von beiden Platten (13, 14) mit einer im Wesentlichen lamellierten Form, eine Struktur ähnlich wie das erste selbsttragende Seitenteil (6) definiert, definiert ist;
die erste Platte (13), die an ihrer unteren Seite, gegenüberliegend von der der Verbindung mit der zweiten Platte (14) am unteren Ende des ersten selbsttragenden Seitenteils (6) des Lifts (1) durch den Trägerkörper des Balges (12) oder der Luftfeder befestigt ist, wobei die erste Platte (13) zweite Löcher und/oder Schlitze (10') aufweist, und die zweite Platte (14) an ihrer oberen Seite gegenüberliegend von der der Verbindung mit der ersten Platte (13) ein oberes Loch (8) zum Verbinden mit der Stütze (2) der Luftfederung aufweist und ebenfalls dritte Löcher und/oder Schlitze (10") aufweist, und;
die Verbindung der ersten Platte (13) mit dem ersten selbsttragenden Seitenteil (6) durch die Distanz (11) die Position des Lifts (1) je nach Federung anpassen kann.

2. Lift (1) für eine Drehachse (4) von Industriefahrzeugen nach Anspruch 1, **dadurch gekennzeichnet, dass** die erste Platte (13), die Teil des zweiten Seitenteils (7) ist, an einer Seite zum Haften an und Verbinden mit der zweiten Platte (14) zweite Löcher und/oder Schlitze (10') zum Anordnen und Verbinden der Distanz (11) ähnlich wie die ersten Löcher und/oder Schlitze (10) des ersten Seitenteils (6) aufweist.

3. Lift (1) für eine Drehachse (4) von Industriefahrzeugen nach Anspruch 1, **dadurch gekennzeichnet, dass** die zweite Platte (14), die Teil des zweiten Teils (7) ist, das mit seinem oberen Abschnitt mit der Stütze (2) der Luftfederung durch sein oberes Loch (8) verbunden werden kann, an der Seite zu ihrem Befestigen an und Verbinden mit der ersten Platte (13) dritte Löcher und/oder Schlitze (10") zum Verbinden mit der ersten Platte (13) aufweist.

4. Lift (1) für eine Drehachse (4) von Industriefahrzeugen nach Anspruch 1, **dadurch gekennzeichnet, dass** die Verbindung der ersten Platte (13) und der zweiten Platte (14) durch ein Verbindungselement (15), vorzugsweise eine erste Schraube (15), und ein Befestigungselement (17), vorzugsweise eine verriegelte Lasche (17), der ersten Platte (13) oder der zweiten Platte (14), das in eine ergänzende Aussparung (18) der zweiten Platte (14) oder ersten Platte (13) passt, definiert wird.

5. Lift (1) für eine Drehachse (4) von Industriefahrzeugen nach den vorhergehenden Ansprüchen, **dadurch gekennzeichnet, dass** die Verbindung der ersten Platte (13) und der zweiten Platte (14) durch die einander ähnelnden zweiten und dritten Löcher und/oder Schlitze an beiden Platten (13, 14) mit dem Verbindungselement (15) und einem Passelement, vorzugsweise einer zweiten Schraube, zum Anordnen der zweiten Platte (14) in Bezug auf die erste Platte (13) definiert wird.

6. Lift (1) für eine Drehachse (4) von Industriefahrzeugen nach Anspruch 1, **dadurch gekennzeichnet, dass** das zweite Seitenteil (7), definiert durch eine Verbindung der ersten Platte (13) und der zweiten Platte (14), mit dem ersten selbsttragenden Seitenteil (6) durch eine Distanz (11) verbunden ist.

## Revendications

1. Appareil de levage (1) pour un essieu rotatif (4) pour véhicules industriels destiné à être couplé à un support d'une suspension pneumatique d'un bras de suspension fixé à l'essieu rotatif (4) pour être levé et à un ressort pneumatique de la suspension, **caractérisé en ce que** l'appareil de levage (1) comprend une première partie latérale unitaire (6) et une seconde partie latérale (7) avec une forme généralement laminaire qui, grâce à leur extrémité supérieure, peuvent être couplées au support de la suspension et grâce à leur extrémité inférieure, sont assemblées par le biais d'un corps de support d'un soufflet qui sert de moyen de levage, dans lequel :
• la première partie latérale unitaire (6) prévue avec des premiers trous et/ou fentes (10) pour positionner et assembler un dispositif d'espacement (11) et la seconde partie latérale (7) définie par une première et une seconde plaque (13, 14) pouvant être fixées entre elles par au moins un élément d'assemblage (15), de préférence une première vis (15) et un second élément de fixation, de sorte que l'assemblage des deux plaques (13, 14) avec une forme généralement laminaire, définit une structure similaire à la première partie latérale unitaire (6) ;
• la première partie (13) qui , sur son côté inférieur, opposé à celui du joint avec la seconde plaque (14), est fixée sur l'extrémité inférieure de la première partie latérale unitaire (6) de l'appareil de levage (1) au moyen du corps de support du soufflet (12) ou du ressort pneumatique, la première plaque (13) ayant des deuxièmes trous et/ou fentes (10'), et la seconde plaque (14), sur son côté supérieur opposé à celui du joint avec la première plaque (13), a un trou supérieur (8) pour s'assembler au support (2) de la suspension pneumatique, et a également des troisièmes trous et/ou fentes (10") ; et
• le joint de la première plaque (13) avec la première partie latérale unitaire (6) au moyen du dispositif d'espacement (11) pouvant ajuster la position de l'appareil de levage (1) en fonction de la suspension.

2. Appareil de levage (1) pour un essieu rotatif (4) de véhicules industriels selon la revendication 1, **caractérisé en ce que** la première plaque (13) qui fait partie de la seconde partie latérale (7) a, sur un côté pour fixer et s'assembler à la seconde plaque (14), des deuxièmes trous et/ou fentes (10') pour le positionnement et l'assemblage du dispositif d'espacement (11), similaire aux premiers trous et/ou fentes (10) de la première partie latérale (6).

3. Appareil de levage (1) pour un essieu rotatif (4) de véhicules industriels selon la revendication 1, **caractérisé en ce que** la seconde plaque (14), qui fait partie de la seconde partie (7), qui peut être assemblée sur sa partie supérieure, au support (2) de la suspension pneumatique, par le biais de son trou supérieur (8) a, sur le côté pour sa fixation et son assemblage à la première plaque (13), des troisièmes trous et/ou fentes (10") pour l'assemblage à ladite première plaque (13).

4. Appareil de levage (1) pour un essieu rotatif (4) de véhicules industriels selon la revendication 1, **caractérisé en ce que** le joint de la première plaque (13) et de la seconde plaque (14) est défini par un élément d'assemblage (15), de préférence une première vis (15), et un élément de fixation (17), de préférence une patte fixée (17), de la première plaque (13) ou de la seconde plaque (14) qui s'ajuste dans un évidement complémentaire (18) de la seconde plaque (14) ou de la première plaque (13).

5. Appareil de levage (1) pour un essieu rotatif (4) de véhicules industriels selon les revendications précédentes, **caractérisé en ce que** le joint de la première plaque (13) et de la seconde plaque (14) est défini par les deuxièmes et troisièmes trous et/ou fentes, similaires entre eux, sur les deux plaques (13, 14) avec l'élément d'assemblage (15) et un élément d'alignement, de préférence une seconde vis, afin de positionner la seconde plaque (14) par rapport à la première plaque (13).

6. Appareil de levage (1) pour un essieu rotatif (4) de véhicules industriels selon la revendication 1, **caractérisé en ce que** la seconde partie latérale (7), définie par un joint de la première plaque (13) et de la seconde plaque (14), est assemblée à la première partie latérale unitaire (6) au moyen d'un dispositif d'espacement (11).
